# EUROPÄISCHE PATENTSCHRIFT

(11) **EP 0 687 618 B1**
(45) Veröffentlichungstag und Bekanntmachung des Hinweises auf die Patenterteilung: **07.10.1998**
(21) Anmeldenummer: 95108867.3
(22) Anmeldetag: 08.06.1995
(51) Int. Cl.: B62D 55/096, B62D 55/20

(54) **Antriebssystem für eine Gleiskette**
Drive system for a track chain
Système d'entraînement pour une chenille

(30) Priorität: 17.06.1994 DE 4421001
(43) Veröffentlichungstag der Anmeldung: 20.12.1995
(73) Patentinhaber: Diehl Remscheid GmbH & Co., D-42857 Remscheid (DE)
(72) Erfinder: Wiesner, Hagen-Heinz, D-42659 Solingen (DE); Spies, Klaus, D-42859 Remscheid (DE); Neubert, Bernd-Dieter, D-42857 Remscheid (DE)
(74) Vertreter: Hofmann, Gerhard, Dipl.-Ing. Patentassessor

(56) Entgegenhaltungen:
- WO-A-88/03624
- WO-A-93/11022
- FR-A- 2 449 021
- US-A- 4 452 495

## Beschreibung

Die Erfindung bezieht sich auf ein Antriebssystem für eine Gleiskette nach dem Oberbegriff des Anspruchs 1.

Aus der WO-A-88 03624, Caterpillar Inc. ist ein Antriebssystem für eine Gleiskette bekannt, wobei zum Antrieb der Gleiskette an einem Antriebsrad Stege vorgesehen sind, auf denen Antriebszähne elastisch gelagert sind. Hierzu ist auf den Stegen eine Gummilagerung vorgesehen. Diese Gummilagerung besteht aus einer elastischen Buchse, die mit einer metallischen Hülse fest verbunden ist. Dieser Gummi-Metallverbund ist auf einem Steg innerhalb einer seitlich begrenzten Ausnehmung des Zahnes gelagert. Beim Eingriff eines der Zähne in die Gleiskette erfolgt eine zweifache Geräuschdämpfung, nämlich durch eine Halbschaleneinlage aus Polyester im unmittelbaren Zahnbereich und durch die vorbeschriebene elastische Steglagerung. Stöße bzw. Schwingungen verursachen in der elastischen Steglagerung eine Druckbeanspruchung des Gummis, der aufgrund des vorgegebenen Volumens eine progressive Dämpfung der Schwingung bewirkt, da das Volumen des Gummis durch die Ausnehmung begrenzt ist. Die Größe des Volumens entspricht dem Volumen des Gummis. Nachteilig ist daher, daß das Dämpfungsvermögen der gummielastischen Steglagerung aufgrund des geringen Federweges relativ klein ist. Durch die wechselnde Komprimierung des Gummis in der geschlossenen Ausnehmung tritt wegen der raschen Erwärmung die baldige Ermüdung der elastischen Lagerung ein.

Aus der US-A-4 452 495, Orlandea Nicolae V ist ein Antriebssystem für eine Gleiskette bekannt, bei der für die Gummilagerung der Antriebsbuchse keine separaten Freiräume vorgesehen sind. Damit entspricht diese Schrift der WO-A-88 03624.

Die WO-A-93 11022, Warane Pty Ltd. zeigt ein Antriebssystem für eine Bandkette, bei der die Antriebskörper 89 rotationsfähig ausgebildet sind. Die Lagerung dieser Antriebskörper 89 ist nicht offenbart.

Bei der FR-A-2 449 021, Caterpillar Mitsubishi Ltd. liegt ein Dämpfungssystem für eine Gleiskette in der Weise vor, daß zwischen zwei kettenseitigen Antriebskörpern an dem Kettenkörper ein Metallgummielement gelagert ist. Dieses Metallgummielement kommt offensichtlich beim Einlaufen der Kette in das Antriebsrad vorzeitig (gegenüber den Antriebskörpern) mit dem Kettenrad in Berührung und dämpft daher beim Einlaufen bzw. beim Umlauf am Antriebsrad die Geräuschemission.

Der Erfindung liegt die Aufgabe zugrunde, einen schwingungsarmen Antrieb für eine Gleiskette vorzuschlagen, der eine lange Gebrauchsdauer ermöglicht.

Die Erfindung löst diese Aufgabe entsprechend den kennzeichnenden Merkmalen des Anspruches 1.

Vorteilhafte Weiterbildungen der Erfindung sind den Unteransprüchen zu entnehmen.

Nach dem Anspruch 1 werden Schwingungen in Entstehungsnähe gedämpft. Die Gummilagerung der Antriebskörper dämpft insbesondere den Einlaufstoß zwischen dem metallischen Antriebskörper und dem ebenfalls aus Metall bestehenden Führungszahn, und zwar sowohl vom Zeitpunkt der ersten Berührung bis zum vollständigen Eingriff und bis zum Abheben des Antriebskörpers beim Austritt des Führungszahnes aus dem Antriebsrad.

Durch die Gummibandage auf dem Antriebsrad in Verbindung mit der Ausbildung des Antriebsrades als Polygon wird eine weitere Schwingungsdämpfung erreicht. Jedes Kettenglied liegt großflächig und eben am Antriebsrad auf. Das bedeutet auch geringen Verschleiß.

Die gummigelagerten Antriebskörper und die Gummibandagen dämpfen insbesondere Schwingungen, die aufgrund des Polygoneffektes beim Ein- und Auslauf der Kette entstehen. Damit werden nur noch minimale Schwingungen in eine Fahrzeugstruktur induziert, so daß empfindliche elektronische und optische Geräte störungsfrei bleiben.

Wesentlich für das Aufgleiten eines Kettengliedes auf das Antriebsrad sind die Polygonflächen des Antriebsrades zwischen den Antriebsbuchsen. Dadurch ist gewährleistet, daß zwischen der Zahnflanke des Führungszahnes und dem Antriebskörper ein extrem kurzer Reibungsbereich - und zwar unmittelbar in der Nähe des Zahnfußes des Führungszahnes - vorliegt. Resultierend aus diesem kurzen Reibungsbereich ergibt sich eine sehr geringe Beanspruchung der Gummilagerung des Antriebkörpers. Denn in der Einlaufphase der Kette ist der Verdrehwinkel des Gummilagers minimal. Es wird eine große Lebensdauer der Bolzenlagerung erreicht und eine Minimierung von Schwingungen.
Auch wird durch die Polygonausbildung die gewollte Einlauf-Kinematik im Bereich Antriebsbuchse/Führungszahnflanke erreicht.
Die Polygonausbildung erlaubt eine großflächige Auflage des Rohrkörpers auf der Bandage des Antriebsrades. Das bedeutet geringen Verschleiß.

Schließlich ermöglicht die Polygonausbildung den erforderlichen Bauraum zur Befestigung der Antriebsbuchsen im Antriebsrad.

Das Antriebsrad könnte auch kreisrund sein.
Die Folge wären ungünstige Verhältnisse bezogen auf die vorgenannten Vorteile.

Zur großen Standzeit der Gummilagerung tragen die Merkmale des Anspruches 3 bei, indem der Gummimantel radial vorgespannt ist und seitliche Ausdehnungsräume innerhalb der Antriebsbuchse besitzt.

Die kreisringförmige Antriebsbuchse nach dem Anspruch 4 ermöglicht eine lange Gebrauchdauer der Antriebsbuchse, indem sie nach einer gewissen Gebrauchsdauer um einen bestimmten Winkel in bezug auf die Beanspruchungsrichtung verdreht wird.

Eine leichte Austauschbarkeit der Antriebskörper ist durch den Anspruch 5 gewährleistet. Eine geringe Beanspruchung des Führungszahnes und damit große Standzeit ist durch das Merkmal des Anspruch 6 gegeben und wird in einfacher Weise nach dem Merkmal des Anspruch 7 erreicht.

Die Geometrie der Zahnflanken des Führungszahnes ist nach dem Anspruch 8 so gestaltet, daß der Berührungspunkt zwischen der Antriebsflanke des Führungszahnes und Antriebsbuchse im Bereich des Fußes des Führungszahnes liegt. Die dadurch entstehenden kurzen Reibwege führen zu einem sehr geringen Verdrehwinkel des Gummilagers. Aufgrund der dadurch hervorgerufenen geringeren Schubbeanspruchung des Gummis wird die große Standzeit des Gummilagers erreicht.

Durch eine geringe Masse der Kettenglieder, wie sie aus den Ansprüchen 9 und 10 hervorgehen, ist der Grad der Schwingungsinduzierung am Antriebsrad gering. Aufgrund des verwendeten Werkstoffes ist es möglich, ein, ein geringes Gewicht aufweisendes Kettenglied kostengünstig herzustellen. Es sind ohne weiteres geringe Wandstärken in den Bereichen realisierbar, in denen die Beanspruchung gering ist.

Das Antriebsrad nach dem Anspruch 11 besteht aus einfachen konstruktiven Teilen und ermöglicht aufgrund der konstruktiven Gestaltung das Auswechseln der Antriebskörper auch bei aufgelegter Kette und montiertem Antriebsrad. Bei bestimmter Verschleißtiefe der Antriebsbuchse ist ohne weiteres ein bestimmter Winkelversatz realisierbar um eine unverschlissene Zone der Antriebsbuchse in Einsatz zu bringen.

Die Schwingungsdämpfung zwischen der Lagerbuchse und der Antriebsbuchse - auch unter Belastung - ist durch den Anspruch 12 gewährleistet. Es tritt eine stark verminderte Körperschallverbindung zwischen der Antriebsbuchse und dem Antriebsrad bzw. der Antriebsbuchse und der Lagerbuchse auf.

Die gummierten Kettenbolzen einer Verbinderkette nach dem Anspruch 13 gewährleisten eine Schwingungsdämpfung in Bezug auf die Gleiskette. Dieser isolierte Schwingungsbereich bezieht sich nur auf das, durch eine Antriebsbuchse erfaßte Kettenglied. Die bei diesem Vorgang erzeugten Schwingungen werden durch die Gummilagerung der Kettenbolzen nicht oder nur in sehr geringem Maße auf benachbarte Kettenglieder weitergeleitet.

Ausführungsbeispiele der Erfindung sind in der Zeichnung dargestellt. Es zeigt
Fig. 1 einen Abschnitt einer Verbinderkette im Eingriff mit einem Antriebsrad
Fig. 2 einen Schnitt II-II nach Figur 1 durch das Antriebsrad
Fig. 3 einen Schnitt III-III durch ein Kettenglied nach Figur 1 und
Fig. 4-6 verschiedene Geometrieen der Zahnflanke eines Führungszahnes.

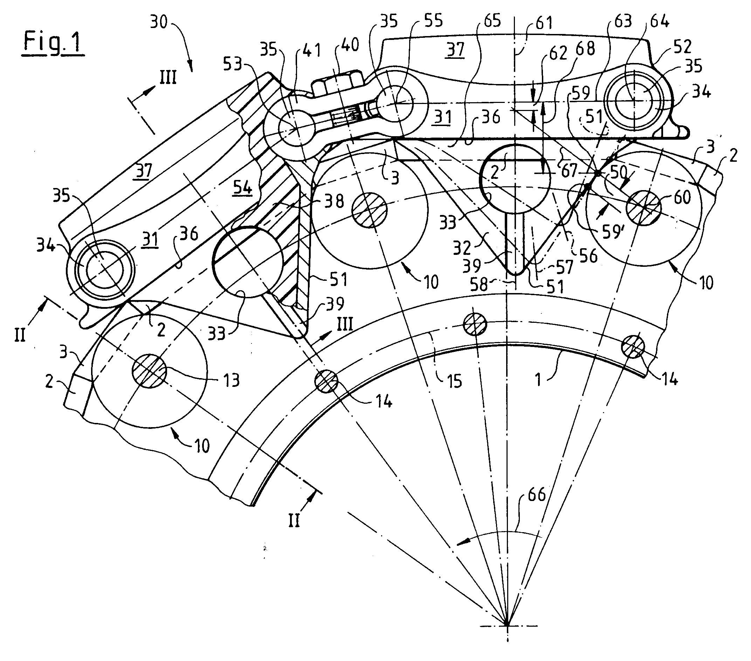

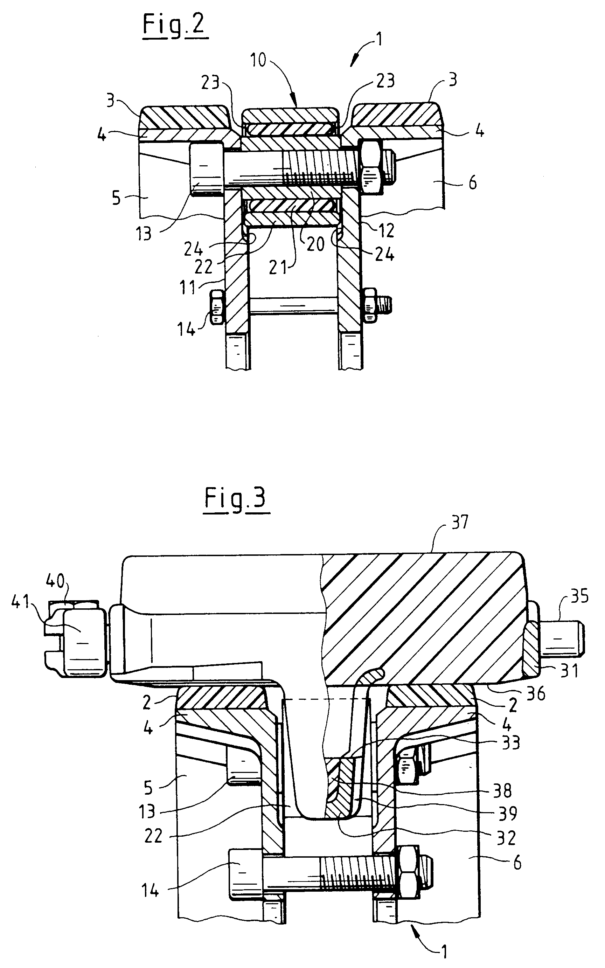

Nach den Figuren 1 und 2 steht ein Antriebsrad 1 in nichtgezeichneter Weise mit einem Antriebsstrang eines Kettenfahrzeuges in Verbindung. Das Antriebsrad 1 ist als Polygon ausgebildet und umfangseitig mit langen und kurzen Gummibandagen 2,3 fest verbunden. Die Gummibandagen 2,3 bedecken umfangseitige axiale Abschnitte 4 von L-förmigen Scheiben 5,6.

Antriebskörper 10 liegen zwischen Ringflanschen 11,12 und sind durch Schraubverbindungen 13 befestigt. Zusätzliche Verbindungen 14 liegen auf einem inneren Teilkreis 15 des Antriebsrades 1 zur Befestigung an einer nicht dargestellten Radnabe.

Zwischen den Ringflanschen 11,12 sind bei jedem Antriebskörper 10 Lagerbuchsen 20 stirnseitig durch die Schraubverbindungen 13 fest eingespannt. Ein radial vorgespannter Gummimantel 21 trägt eine randschichtgehärtete Antriebsbuchse 22 aus einem vergütbarem Stahl. Der Gummimantel 21 kann sich jeweils in Achsrichtung in Freiräume 23 ausdehnen.

Die Antriebsbuchse 22 ist mit einer axial kürzeren Länge ausgestattet als die Lagerbuchse 20. Zusätzlich sind an den Ringflanschen 11,12 Ausnehmungen 24 vorgesehen. Diese gewährleisten die abgefederte Umfangsverdrehung und/oder den radialen Federweg der Antriebsbuchse 22. Der Gummimantel kann bei Kompression seitlich in die Ausnehmungen 24 ausweichen. Die Antriebsbuchse 22 bleibt dabei frei beweglich also sowohl in Umfangsrichtung als auch radial.

Nach den Figuren 1 und 3 besteht eine Verbinderkette 30 aus mehreren, aus Stahl gegossenen Rohrkörpern 31 mit integrierten Führungszähnen 32, mit jeweils einer querliegenden Bohrung 33, mit Gummilagerungen 34 versehene Bolzen 35 aus Stahl, laufrollenseitigen Innengummierungen 36 und aus einer fahrbahnseitigen Außengummierungen 37 sowie einer inneren Gummierung 38 und auf den Bolzen 35 über Schraubverbindungen 40 festgeklemmten Verbindern 41.

Die Gummierungen 36 - 38 sind einstückig.
Die Gummierung 38 dämpft eventuell von der Kette 30 abgestrahlten Luftschall, der aufgrund von Schwingungen beim Durchlauf der Kette 30 durch das Laufwerk entsteht.

Seitliche Nuten 39 an den Führungszähnen 32 dienen zur Feststellung des Verschleißes.

Beim Einlauf der Verbinderkette 30 in das in Pfeilrichtung 66 drehende Antriebsrad 1 gemäß Figur 1 liegt ein kurzer Reibweg 50 an der Zahnflanke 51 des Kettengliedes 52 vor.

Beim Einlaufvorgang ist davon auszugehen, daß die gerade ausgebildete Zahnflanke 51 des Kettengliedes 54 bereits am Antriebskörper 10 anliegt. Das Kettenglied 52 schwenkt zunächst um eine Drehachse 53 des Kettengliedes 54 und zwar solange, bis der Rohrkörper 31 des Kettengliedes 54 an der Gummibandage 2 aufliegt. Dann schwenkt das Kettenglied 52 um eine Drehachse 55 des Kettengliedes 52 gemäß den strichpunktiert gezeichneten Positionen 56 und 57 bis in die - mit ausgezogenen Linien gezeichnete - Endposition 58. In der Position 56 liegt eine Berührung zwischen der geraden Zahnflanke 51 und dem Antriebskörper 10 nicht vor. Erst in der Position 57 berührt die Zahnflanke 51 den Antriebskörper 10 im Punkt 59'. Durch die weitere Schwenkbewegung des Kettengliedes 52 in die Endposition 58 bleibt der Reibkontakt zwischen der Zahnflanke 51 und dem Antriebskörper 10 bestehen, so daß dadurch der Abroll- und Reibweg 50 durch den Abstand der Punkte 59 und 59' definiert ist. Hierbei gehört der Punkt 59' zur Position 57 der Zahnflanke 51 und der Punkt 59 zur Endposition 58 der geraden Zahnflanke 51.

Die verlängerte Linie 67, die durch das Zentrum 60 des Antriebskörpers 10 und den Berührungspunkt 59 = Tangentenpunkt der Zahnflanke 51 am Antriebskörper 10 geht, schneidet die Symmetrieachse 61 des Führungszahnes 32 gemäß einem kleinen Abstand 62, also sehr nahe der Verbindungslinie 63 zu den Drehachsen 55,64 des Kettengliedes 52. Daraus resultiert, daß der Berührungspunkt 59 im Bereich des Führungszahnfußes 65 liegt. Somit besteht ein nur sehr kurzer Reibweg 50, so daß der Verdrehwinkel des Gummimantels 21 klein ist. Weiterhin resultiert daraus eine geringe Schubbeanspruchung des Gummis des Gummimantels 21, wodurch eine lange Standfestigkeit des Gummimantels 21 garantiert ist.

Der Berührungspunkt 59 liegt in einem kurzen Abstand 68 zur Verbindungslinie 63, d. h., das vom Antriebsrad 1 am Rohrkörper 31 erzeugte Kippmoment ist klein gegenüber dem Stand der Technik.

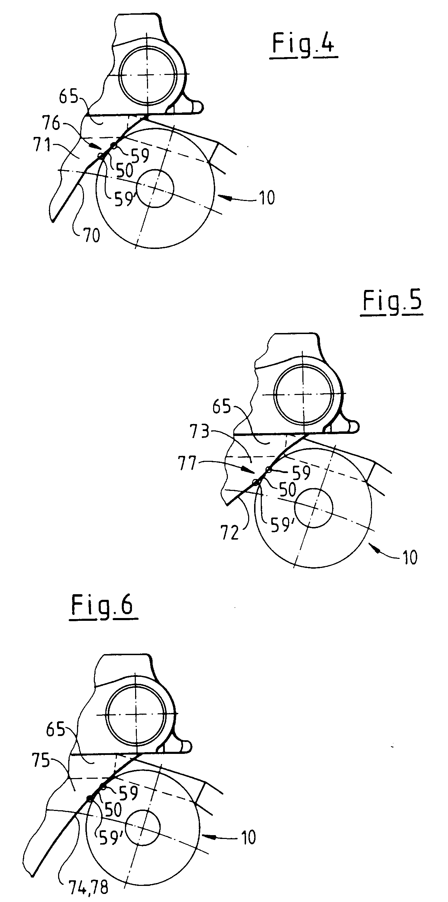

Gemäß der Figur 1 ist die Zahnflanke 51 gerade und zur Verbreiterung des Zahnfußes 65 nach außen abgeknickt.
Gemäß den Figuren 4-6 liegen abweichende Geometrien der Zahnflanken 70, 72, 74 der Führungszähne 71, 73, 75 vor. Die Zahnflanke 70 nach Figur 4 ist ähnlich der Zahnflanke 72 gemäß Figur 5 durch konvexe Bogen 76, 77 im Bereich des Berührungspunktes 59 gestaltet.
Nach Figur 6 weist die Zahnflanke 74 des Führungszahnes 75 eine konkave Kontur 78 auf. Damit wird erreicht, daß der Berührungspunkt 59 soweit wie möglich in Richtung Führungszahnfuß 65 verlagert ist um einen kurzen Reibweg zu erreichen.

Eine kostengünstige und standfeste Gummierung des Kettengliedes 52 liegt dadurch vor, daß durch Vulkanisation der aus einem Stück bestehende Gummikörper mit den Abschnitten Innengummierung 36, Außengummierung 37 und Gummierung 38 mit dem aus Stahl bestehenden Kettenglied 52 verbunden wird. Der voluminöse Gummikörper mit seiner großflächigen Anlage am Kettenglied 52 gewährleistet eine große Schwingungdämpfung und lange Standzeiten der laufrollenseitigen Innengummierung 36 und der fahrbahnseitigen Außengummierung 37. Der Gummikörper kann mit dem Kettenglied 52 auch durch Kleben, Form und/oder Kraftschluß verbunden sein.

## Patentansprüche

1. Antriebssystem für eine Gleiskette (30) bestehend aus gummierten Kettengliedern (31) mit Führungszähnen (32), wobei zum Antrieb der Gleiskette (30) an einem Antriebsrad (1) Stege (13, 20) vorgesehen sind, die die Führungszähne (32) antreiben, und auf den Stegen (13, 20) gummigelagerte Antriebskörper (10) aus Metall angeordnet sind,
dadurch gekennzeichnet,
daß der aus einer, unmittelbar den Führungszahn (32) antreibenden, Antriebsbuchse (22) bestehende Antriebskörper (10) über einen radial vorgespannten Gummimantel (21) auf einer Lagerbuchse (20) gelagert ist, wobei der Ringraum zwischen Lagerbuchse (20) und Antriebsbuchse (22) randseitige Freiräume (23) für den Gummimantel (21) aufweist.

2. Antriebssystem nach Anspruch 1,
dadurch gekennzeichnet,
daß das Antriebsrad (1) als Polygon ausgebildet ist, und die ebenen Abstützflächen des Polygons mit Gummibandagen (2, 3) versehen sind.

3. Antriebssystem nach Anspruch 2,
dadurch gekennzeichnet,
daß die Antriebsbuchse (22) einen kreisringförmigen Querschnitt aufweist und aus Metall besteht.

4. Antriebssystem nach Anspruch 3,
dadurch gekennzeichnet,
daß der Antriebskörper (10) über lösbare Mittel (13) an dem Antriebsrad (1) austauschbar und verdrehbar befestigt ist.

5. Antriebssystem nach Anspruch 1,
dadurch gekennzeichnet,
daß der Berührungspunkt (59) der Antriebsbuchse (22) im Bereich des Führungszahnfußes (65) liegt.

6. Antriebssystem nach Anspruch 5,
dadurch gekennzeichnet,
daß die verlängerte Linie, die durch das Zentrum (60) des Antriebskörpers (10) und den Berührungspunkt (59) des Antriebskörpers (10) geht,
die Symmetrieachse (61) des Führungszahnes (32) nahe (Abstand 62) der Verbindungslinie (63) zwischen den Schwenkachsen (55, 64) des Kettengliedes (52) schneidet.

7. Antriebssystem nach Anspruch 1,
dadurch gekennzeichnet,
daß die Geometrie der Zahnflanken (51, 70, 72, 74) des Führungszahnes (32, 71, 73, 75) im Reibungsbereich (Reibweg 50) geradlinig, konvex gebogen oder konkav gebogen ist.

8. Antriebssystem nach Anspruch 1,
dadurch gekennzeichnet,
daß das Kettenglied (52) aus einem Werkstoff, wie Stahl, Aluminium, Kunststoff oder Verbundwerkstoff besteht und mit einem Laufpolster (37) sowie einer Innengummierung (36) als Teil-Innenlauffläche versehen ist.

9. Antriebssystem nach Anspruch 8,
dadurch gekennzeichnet,
daß das Kettenglied (52) einen integrierten Führungszahn (32, 71, 73, 75) mit querliegender Bohrung (33) aufweist.

10. Antriebssystem nach den Ansprüchen 1, 2 oder 3,
dadurch gekennzeichnet,
daß das Antriebsrad (1) aus zwei topfförmigen dünnwandigen L-förmigen Scheiben (5, 6) besteht, deren stirnseitige Ringflansche (11, 12) durch Schraubverbindungen (13, 14) miteinander auf Abstand entsprechend der Breite der Antriebskörper (10) miteinander verbunden sind, wobei die Antriebskörper (10) auf den Schraubverbindungen (13) gelagert sind.

11. Antriebssystem nach den Ansprüchen 3 oder 10,
dadurch gekennzeichnet,
daß die Lagerbuchsen (20) der Antriebskörper (10) zwischen den Scheiben (5, 6) fest eingespannt sind,
und die Antriebsbuchsen (22) durch beidseitige Ausnehmungen (24) in den Scheiben (5, 6) in radialer und axialer Richtung zwischen den Scheiben (5, 6) beweglich gelagert sind.

12. Antriebssystem nach Anspruch 1,
dadurch gekennzeichnet,
daß die Gleiskette als Verbinderkette (30) mit gummigelagerten Bolzen (35) und darauf befestigten Verbindern (41) ausgebildet ist.

13. Antriebssystem nach Anspruch 8,
dadurch gekennzeichnet,
daß die laufrollenseitige Innengummierung (36), die fahrbahnseitige Außengummierung (37, Laufpolster) sowie die Gummierung (38) im Führungszahn (32) einstückig ist und mit dem Kettenglied (52) durch Vulkanisation, kleben und/oder durch Form und/oder Kraftschluß verbunden ist.

## Claims

1. Driving system for a crawler chain (30) consisting of rubber-covered chain links (31) with guide teeth (32), whereby, for driving the crawler chain (30), flanges (13, 20) are provided on a drive gear (1) which drive the guide teeth (32), and rubber-mounted driving elements (10) made of metal are located on the flanges (13, 20),
characterized in that
the driving element (10), which consists of a driving bush (22) directly driving the guide tooth (32), is mounted by way of a radially prestressed rubber casing (21) on a bearing bush (20), the annular space between bearing bush (20) and driving bush (22) having peripheral Free spaces (23) For the rubber casing (21).

2. Driving system according to Claim 1,
characterized in that
the drive gear (1) takes the form of a polygon, and the flat supporting surfaces of the polygon are provided with rubber padding (2, 3).

3. Driving system according to Claim 2,
characterized in that
the driving bush (22) has a circular-ring-shaped cross-section and is made of metal.

4. Driving system according to Claim 3,
characterized in that
the driving element (10) is fixed by way of detachable means (13) to the drive gear (1) in such a way that it can be replaced and can twist.

5. Driving system according to Claim 1,
characterized in that
the point of contact (59) of the driving bush (22) lies in the region of the base (65) of the guide tooth.

6. Driving system according to Claim 5,
characterized in that
the extended line, which passes through the centre (60) of the driving element (10) and the point of contact (59) of the driving element (10), intersects the axis of symmetry (61) of the guide tooth (32) near (distance 62) the connecting line (63) between the swivelling axes (55, 64) of the chain link (52).

7. Driving system according to Claim 1,
characterized in that
the geometry of the flanks (51, 70, 72, 74) of the guide tooth (32, 71, 73, 75) in the area of friction (frictional path 50) is rectilinear, convexly curved or concavely curved.

8. Driving system according to Claim 1,
characterized in that
the chain link (52) is made of a material, such as steel, aluminium, plastic or a composite material and is provided with an outer cushion (37) as well as an inner rubber covering (36) as partial inner bearing surface.

9. Driving system according to Claim 8,
characterized in that
the chain link (52) has an integrated guide tooth (32, 71, 73, 75) with transverse bore (33).

10. Driving system according to Claims 1, 2 or 3,
characterized in that
the drive gear (1) consists of two pot-shaped, thin-walled, L-shaped plates (5, 6) whose annular flanges (11, 12) located at the front end are joined together by screw connections (13, 14) at a distance corresponding with the width of the driving element (10), the driving element (10) being mounted on the screw connections (13).

11. Driving system according to Claims 3 or 10,
characterized in that
the bearing bushes (20) of the driving elements (10) are firmly clamped between the plates (5, 6) and the driving bushes (22) are mounted in the plates (5, 6) by means of recesses (24) on both sides, so as to be movable in radial and axial direction between the plates (5, 6).

12. Driving system according to Claim 1,
characterized in that
the crawler chain is designed as a connector chain (30) with rubber-mounted bolts (35) and connectors (41) Fixed thereon.

13. Driving system according to Claim 8,
characterized in that
the inner rubber covering (36) on the track-roller side, the outer rubber covering (37, outer cushion) on the road side and the rubber covering (38) in the guide tooth (32) are in one piece and are connected with the chain link (52) by vulcanization, gluing and/or by positive locking and/or non-positive locking.

## Revendications

1. Système d'entraînement pour une chenille (30) constitué de maillons (31) caoutchoutés, avec des dents de guidage (32), des nervures (13, 20) étant prévues sur une roue d'entraînement (1) pour assurer l'entraînement de la chenille (30), nervures entraînant les dents de guidage (32) et des corps d'entraînement (10) en métal, montés sur du caoutchouc, étant disposés sur les nervures (13, 20), caractérisé en ce que le corps d'entraînement (10), constitué d'une douille d'entraînement (22), entraînant directement la dent de guidage (32), est monté sur une douille formant palier (20), par l'intermédiaire d'une enveloppe en caoutchouc (21) précontrainte radialement, l'espace annulaire, constitué entre la douille formant palier (20) et la douille d'entraînement (22), présentant du côté bordure des espaces libres (23) destinés à l'enveloppe en caoutchouc (21).

2. Système d'entraînement selon la revendication 1,
caractérisé en ce que
la roue d'entraînement (1) est réalisée sous forme de polygones et les surfaces d'appui planes du polygone étant pourvues de bandages en caoutchouc (2, 3).

3. Système d'entraînement selon la revendication 2,
caractérisé en ce que
la douille d'entraînement (22) présente une section transversale en forme d'anneau de cercle et est réalisé en métal.

4. Système d'entraînement selon la revendication 3,
caractérisé en ce que
le corps d'entraînement (10) est fixé de façon remplaçable et avec possibilité de rotation sur l'arbre d'entraînement (1) par l'intermédiaire de moyens désolidarisables (13).

5. Système d'entraînement selon la revendication 1,
caractérisé en ce que
le point de contact (59) de la douille d'entraînement (22) est situé dans la zone du pied de dents de guidage (65).

6. Système d'entraînement selon la revendication 5,
caractérisé en ce que,
la ligne prolongée passant par le centre (60) du corps d'entraînement (10) et le point de contact (59) du corps d'entraînement (10) coupe l'axe de symétrie (61) de la dent de guidage (32) près (distance 62) de la ligne de liaison (63) tracée entre les axes de pivotement (55, 64) du maillon (52).

7. Système d'entraînement selon la revendication 1,
caractérisé en ce que
la géométrie des flans de dents (51, 70, 62, 74) de la dent de guidage (32, 71, 73, 75), dans la zone de frottement (longueur de frottement 50), est rectiligne, incurvée de façon convexe ou incurvée de façon concave.

8. Système d'entraînement selon la revendication 1,
caractérisé en ce que
le maillon (52) est constitué d'un matériau tel que l'acier, l'aluminium, une matière plastique ou un matériau composite, et est pourvu d'un coussin de défilement (37) ainsi que d'un caoutchoutage intérieur (32) à titre de surface de défilement intérieur partielle.

9. Système d'entraînement selon la revendication 8,
caractérisé en ce que
le maillon (52) présente une dent de guidage (32, 71, 73, 75) intégrée avec un perçage (33) orienté transversalement.

10. Système d'entraînement selon les revendications 1, 2 ou 3,
caractérisé en ce que
la roue d'entraînement (1) est constituée de deux disques (5, 6) en forme de L à parois minces, ayant une forme en pot, dont les brides annulaires (11, 12) situées côté frontal sont reliées ensemble à l'aide de moyens de vissage (13, 14), à une distance correspondant à la largeur du corps d'entraînement (10), les corps d'entraînement (10) étant montés sur les liaisons à vissage (13).

11. Système d'entraînement selon la revendication 3 ou 10,
caractérisé en ce que
les douilles formant paliers (20) des corps d'entraînement (10) sont enserrées fermement entre les disques (5, 6) et les douilles d'entraînement (22) sont montées mobiles à travers des évidements (24) prévus de part et d'autre dans les disques (5, 6), en direction radiale et axiale, entre les disques (5, 6).

12. Système d'entraînement selon la revendication 1,
caractérisé en ce que
la chenille est réalisée sous forme de chaîne à raccords à attaches (30), équipés d'axes (35) montés sur caoutchouc et de raccords à attaches (41) fixés sur ces axes.

13. Système d'entraînement selon la revendication 8, caractérisé en ce que le caoutchoutage intérieur (36) situé côté roue de défilement, le caoutchoutage extérieur (37, coussin de défilement) situé côté piste de roulage, ainsi que le caoutchoutage (38) prévu dans la dent de guidage (32) sont réalisés d'une seule pièce et sont reliés au maillon (52) par vulcanisation, collage et/ou par liaison avec ajustement de forme et/ou à interaction de force ou serrage.
